# EUROPÄISCHE PATENTANMELDUNG

(11) **EP 0 656 306 A2**
(43) Veröffentlichungstag der Anmeldung: **07.06.1995**
(21) Anmeldenummer: 94118351.9
(22) Anmeldetag: 22.11.1994
(51) Int. Cl.: B65G 47/29

(54) **Transporteinrichtung und Verfahren zum gleichmässigen Austragen von reihenweise zugeführten Warenstücken**

(30) Priorität: 02.12.1993 DE 4341044
(71) Anmelder: Klöckner Hänsel GmbH, D-30163 Hannover (DE)
(72) Erfinder: Koop, Franz Dr., D-30171 Hannover (DE)
(74) Vertreter: Rehberg, Elmar, Dipl.-Ing.

(57) **Zusammenfassung**

Eine Transporteinrichtung zum gleichmäßigen Austragen von reihenweise zugeführten Warenstücken 36 weist ein angetriebenes Band 2 auf. Das Band 2 ist im Bereich seines oberen Trums 5 unter Bildung einer Übergabestelle 8 für die Warenstücke 36 zwischen zwei Umlenkkanten 9, 10 in einen Einlaufabschnitt 6 und einen Austrageabschnitt 7 unterteilt. Das Band 2 weist im Bereich seines unteren Trums 4 eine Antriebsstelle 3 auf. Es sind Vorrichtungen 17, 27 zum Festhalten des Einlaufabschnittes 6 und/oder des Austrageabschnittes 7 vorgesehen. Die beiden Umlenkkanten 9, 10 und die Vorrichtung 27 zum Festhalten des Austrageabschnitts 7 sind auf einem in Bandförderrichtung 29 verfahrbaren Schlitten 28 angeordnet. Zwischen der Antriebsstelle 3 und dem Einlaufabschnitt 6 einerseits und zwischen den beiden Umlenkkanten 9, 10 andererseits ist je ein Bandspeicher 31, 33 vorgesehen.

## Beschreibung

Die Erfindung bezieht sich auf eine Transporteinrichtung zum gleichmäßigen Austragen von reihenweise zugeführten Warenstücken, insbesondere Süßwarenstücken, gemäß dem Oberbegriff des Anspruches 1 und ein Verfahren zum gleichmäßigen Austragen von reihenweise zugeführten Warenstücken gemäß dem Oberbegriff des Anspruches 8.

Eine solche Transporteinrichtung findet immer dann Anwendung, wenn Warenstücke, die in feldmäßiger Anordnung herangeführt werden, so weitergefördert werden sollen, daß sie sich in einer ununterbrochenen Reihe hintereinander befinden bzw. in Förderrichtung bewegen. Eine Reihe oder Gruppe von Warenstücken mit begrenzter Anzahl der Warenstücke soll dabei mehrfach hintereinander so angeordnet werden, daß eine ununterbrochene Reihe aus sämtlichen Warenstücken entsteht.

Eine bekannte Transporteinrichtung sieht mehrere hintereinandergeschaltete Austragebänder vor, wobei die einzelnen Warenstücke hintereinander von einem Austrageband auf das nächste übergeben werden. Sobald das Ende einer Artikelreihe das jeweils nächste Austrageband erreicht, wird die Geschwindigkeit sämtlicher dahinter angeordneter Austragebänder solange stark erhöht, bis der Anfang der jeweils nächsten Artikelreihe das betreffende Transportband erreicht. Damit kann man beispielsweise durch eine Geschwindigkeitsverdopplung die Lücke zwischen zwei Artikelreihen halbieren. Die Längen der Austragebänder müssen jedoch so gewählt werden, daß niemals zwei Bandübergänge gleichzeitig zwischen jeweils zwei Artikelreihen liegen. Damit ist es möglich, z. B. mehrere Artikelreihen von beispielsweise 10 Warenstücken so hintereinanderzuschalten, daß eine weitgehend gleichmäßige Reihe von Warenstücken entsteht. Bei bestehenden Anlagen kann die Länge einer Artikelreihe nicht ohne mechanische Umbaumaßnahmen geändert werden. Häufig sind auch mehrere nachgeschaltete Bänder notwendig, um die Lücken zwischen jeweils zwei hintereinander zu transportierenden Artikelreihen zu schließen. Die Antriebe dieser Bänder müssen dann in einem relativ weiteren Bereich und innerhalb kürzester Zeit regelbar sein, so daß eine aufwendige, in der Regel mit optoelektronischen Signalgebern ausgestattete Steuerung erforderlich ist.

Eine gattungsgemäße Transporteinrichtung ist aus der EP 0 433 231 A 1 oder der DE-OS 15 56 704 bekannt. Diese Einrichtungen weisen zwei hintereinander angeordnete, mit unterschiedlicher Geschwindigkeit betriebene Förderbänder auf. Am Ende des Einlaufabschnittes und am Beginn des Austrageabschnittes werden die Bänder mittels Bandumlenkungen umgelenkt. Die Übergabestelle zwischen den Abschnitten kann mittels eines Schlittens in und entgegen der Förderrichtung verschoben werden. Zum Ausgleich der Bandlängen sind zwei Bandspeicher vorgesehen. Durch die Verwendung zweier Bänder mit den zugehörigen Antrieben und einer Überwachungs- und Regeleinrichtung ist der bauliche Aufwand dieser Transporteinrichtungen hoch.

Der Erfindung liegt die Aufgabe zugrunde, bei einer gattungsgemäßen Transporteinrichtung mit verringertem baulichen Aufwand Reihen von Warenstücken zu einer ununterbrochenen Reihe zusammenzusetzen und auszutragen.

Erfindungsgemäß wird dies bei einer gattungsgemäßen Transporteinrichtung durch die kennzeichnenden Merkmale des Anspruches 1 und bei einem gattungsgemäßen Verfahren durch die kennzeichnenden Merkmale des Anspruches 8 gelöst.

Im Bereich des oberen Trums ist ein Einlaufabschnitt und ein Austrageabschnitt gebildet, die zwar im Bereich der Übergabestelle mit zwei gebildeten Umlenkkanten aneinander anstoßen, aber andererseits gleich oder ungleich bewegt werden können. Der Einlaufabschnitt verläuft dabei von der am Anfang des Bandes vorgesehenen Umlenkrolle bis zu einer Umlenkkante. Der Austrageabschnitt erstreckt sich von der anderen benachbarten Umlenkkante bis zu der endseitig vorgesehenen Umlenkkante des Bandes. Im Bereich der beiden benachbart zueinander vorgesehenen Umlenkkanten ist das Band zu einer Schlaufe gelegt. Im Bereich dieser Schlaufe ist ein Bandspeicher vorgesehen, der in der Lage ist, Band aufzunehmen bzw. abzugeben. Auch vor der vorderen Umlenkrolle des Einlaufabschnitts ist ein Bandspeicher vorgesehen, der ebenfalls in der Lage ist, Band aufzunehmen oder abzugeben. Die beiden Bandspeicher sind so miteinander gekoppelt, daß der eine Bandspeicher zwangsläufig so viel Band aufnimmt, wie der andere Bandspeicher abgibt und umgekehrt, so daß die Länge des Bandes insgesamt konstant bleibt, und zwar unabhängig, ob sich die beiden Bandspeicher in Bewegung befinden oder stillgesetzt sind. Das Band wird an einer Antriebsstelle kontinuierlich angetrieben; dennoch sind unterschiedliche Geschwindigkeiten im Bereich des Einlaufabschnitts und/oder des Austrageabschnitts möglich, je nach der Betätigung der Einzelteile. Die Vorrichtungen zum Festhalten des Austrageabschnitts und/oder des Einlaufabschnitts dienen dazu, die beiden Abschnitte mit unterschiedlichen Geschwindigkeiten zu steuern. Wird der Einlaufabschnitt festgehalten, dann steht er still, d. h. er weist die Geschwindigkeit 0 auf, so daß eine Artikelreihe auf den Einlaufabschnitt quer aufgeschoben werden kann. Wird dagegen der Austrageabschnitt festgehalten, dann wirkt sich der kontinuierliche Antrieb des Bandes von der Antriebsstelle her aus, und die beiden Umlenkkanten bewegen sich in Förderrichtung mit einer entsprechenden gleichförmigen Geschwindigkeit. Überlagert werden diese Geschwindigkeiten dann, wenn Bewegungen der Bandspeicher erfolgen.

Die neue Transporteinrichtung ermöglicht es, Artikelreihen gleichmäßig zu einer ununterbrochenen Reihe zusammenzusetzen und auszutragen, wobei die Abstände zwischen je zwei benachbarten Warenstücken geringfügig variieren können. Für viele Anwendungsfälle kommt es hierauf nicht an. Wenn andererseits sichergestellt ist, daß die einzelne Artikelreihe immer an relativ gleicher Stelle auf den Einlaufabschnitt aufgeschoben werden kann, dann besteht sogar die Möglichkeit, die sich zwischen zwei Artikelreihen bildende Lücke zu schließen bzw. auf den Abstand zu verringern, den zwei Warenstücke in der Artikelreihe selbst aufweisen. Es versteht sich, daß zum Vergrößern oder Verkleinern des jeweiligen Abstandes zwischen zwei benachbarten Warenstücken ein weiteres Förderband angeschlossen bzw. nachgeschaltet werden kann.

Vorteilhafte Ausgestaltungen der Erfindung sind in den Unteransprüchen angegeben.

Die Antriebsstelle weist einen Motor und eine Antriebstrommel für den kontinuierlichen Antrieb des Austrageabschnitts auf. Die Antriebsstelle kann dabei etwa unterhalb des Einlaufabschnitts angeordnet sein. Die Anordnung muß so getroffen sein, daß zwischen der Antriebsstelle und der anfangsseitigen Umlenkwalze des Einlaufabschnittes noch der eine Bandspeicher untergebracht werden kann. Zwischen dem Austrageabschnitt und der Antriebsstelle befindet sich kein Bandspeicher. Damit ist sichergestellt, daß der Austrageabschnitt immer mit der an der Antriebsstelle über den Motor gesteuerten Geschwindigkeit angetrieben wird.

Es kann ein steuerbarer Antrieb für die Bewegung des in Bandförderrichtung sowie entgegengesetzt dazu verfahrbaren Schlittens vorgesehen sein. Es ist aber auch möglich, den Antrieb für den Schlitten von der Antriebsstelle des Bandes abzuleiten und den steuerbaren Antrieb lediglich für die Rückbewegung des Schlittens entgegen der Bandförderrichtung einzusetzen.

Es ist ein steuerbarer Antrieb für die Bewegung der beiden Bandspeicher vorgesehen. Es genügt hier ein einziger doppelt wirkender Antrieb, z. B. in Form eines Pneumatik- oder Hydraulikzylinders. Die beiden Bandspeicher sind dabei so gekoppelt, daß sie sich gegenläufig verhalten, so daß die über den steuerbaren Antrieb eingeleitete Bewegung in beiden Bandspeichern wirksam wird und genutzt wird. Einer oder beide steuerbaren Antriebe können als über ein Fluid betätigbare Zylinder ausgebildet sein.

Als Vorrichtungen zum Festhalten des Einlaufabschnitts und des Austrageabschnitts können Bremstrommeln vorgesehen sein, über die das Austrageband mit seinen Abschnitten geführt ist und die in der Nähe des Beginns des Einlaufabschnitts und des Austrageabschnitts angeordnet sind. Die dem Einlaufabschnitt zugeordnete Bremstrommel kann dabei zugleich die Funktion der Umlenktrommel am Beginn des Einlaufabschnitts bilden. Die Bremstrommel am Beginn des Austrageabschnittes ist zweckmäßig etwas unterhalb des Beginns der Bandoberfläche angeordnet, damit eine Umlenkkante eingesetzt werden kann, die infolge eines relativ geringeren Radiuses auch einen engeren Anschluß an die Unlenkkante am Ende des Einlaufabschnittes bildet. Gleichzeitig ist damit sichergestellt, daß der Einlaufabschnitt und der Austrageabschnitt gespannt werden.

Jeder der Bandspeicher weist je eine Umlenktrommel auf, die auf einem gemeinsamen Gleitrahmen angeordnet und mit diesem in Bandförderrichtung und entgegengesetzt dazu über den steuerbaren Antrieb verfahrbar sind, wobei um die Umlenktrommeln Schlaufen des Austragebandes geschlungen sind. Es versteht sich, daß die Transporteinrichtung noch eine Reihe von ortsfest angeordneten Umlenktrommeln oder -walzen aufweist, über die das durchgehende Band geschlungen ist.

Mit dem neuen Verfahren ist es möglich, auf vergleichsweise kurzer Förderstrecke eines einzigen Bandes Artikelreihen zu einer lückenlosen kontinuierlichen Reihe zusammenzusetzen und auszutragen. Das Verfahren der zwei Umlenkkanten kann unabhängig davon erfolgen, welche Geschwindigkeiten der Einlaufabschnitt und der Austrageabschnitt haben. Wenn sich eine Artikelreihe über die Übergabestelle hinwegerstreckt, müssen der Einlaufabschnitt und der Austrageabschnitt mit gleicher Geschwindigkeit angetrieben werden, damit sich die Lücken zwischen benachbarten Warenstücken weder vergrößern noch verkleinern. Wenn jedoch die zwischen zwei Artikelreihen notwendigerweise auftretende Lücke geschlossen werden soll, ist es erforderlich, den Einlaufabschnitt kurzfristig mit einer höheren Geschwindigkeit anzutreiben als den Austrageabschnitt, und zwar so lange, bis die Lücke wieder geschlossen ist. In diesem Moment werden der Einlaufabschnitt und der Austrageabschnitt auf gleiche Geschwindigkeit gebracht, und die weitere Artikelreihe kann die Übergabestelle überfahren. Während dieser Bewegung ist es dann auch möglich, die örtliche Lage der Übergabestelle zu verändern, also in eine Art Ausgangsposition zurückzubewegen.

Der Austrageabschnitt wird kontinuierlich angetrieben, der Einlaufabschnitt wird nach der Übergabe einer Artikelreihe von Warenstücken aus dem Stillstand nach Lösen seiner Vorrichtung zum Festhalten beschleunigt und unter gleichzeitigem Verfahren der Übergabestelle und der Bandspeicher so lange mit höherer Geschwindigkeit als der Austrageabschnitt angetrieben, bis die durch die reihenweise erfolgende Aufgabe erzeugte Lücke beseitigt ist, und der Einlaufabschnitt und der Austrageabschnitt wird nachfolgend bei gelösten Vorrichtungen zum Festhalten mit übereinstimmender Geschwindigkeit angetrieben und die Übergabestelle entgegen der Bandförderrichtung zurückgesetzt. Dabei ist es möglich, die Übergabestelle zu Beginn jedes Aufgabezyklusses in einen Abstand zu dem vordersten Warenstück der Artikelreihe zu verfahren. Dieser Abstand ist dann erforderlich, wenn die Artikelreihen nicht immer an genau übereinstimmender Stelle auf den Einlaufabschnitt aufgegeben werden können, wenn also hinsichtlich der relativen Lage der aufgegebenen Artikelreihe Toleranzen zu überbrücken sind. Solche Toleranzen können ohne weiteres dann auftreten, wenn Warenstücke in feldmäßiger Anordnung über mehrere hintereinandergeschaltete Förderbänder und relativ lange Strecken gefördert werden. Diese Toleranzen bewirken geringfügige Ungleichmäßigkeiten hinsichtlich der jeweiligen Abstände benachbarter Warenstücke in der ausgetragenen Reihe. Im allgemeinen ist dies jedoch nicht nachteilig.

Die neue Transporteinrichtung und das dabei angewendete Verfahren wird anhand der Zeichnungen weiter beschrieben und erläutert.

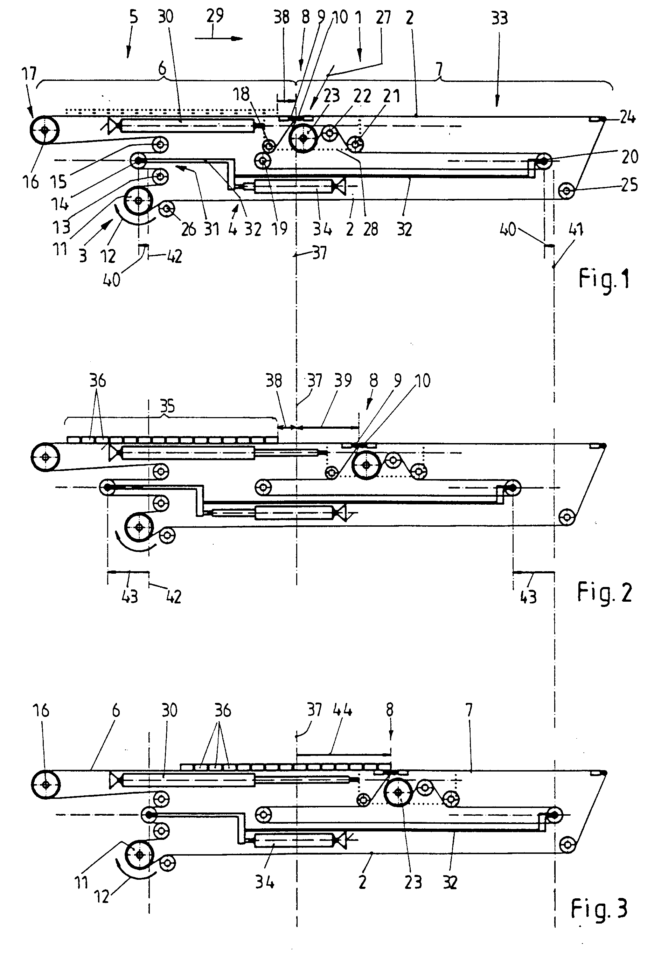

Die Zeichnungen zeigen in den Figuren 1 bis 8 eine Folge von Darstellungen der Einzelteile relativ zueinander, wie sie sich im Verlaufe eines Arbeitszyklusses ergeben.

Die Transporteinrichtung 1 weist ein einziges Band 2 auf, daß über eine ganze Reihe von Rollen oder Walzen geschlungen ist. Es ist eine Antriebsstelle 3 im unteren Trum 4 vorgesehen. Der obere Trum 5 des Bandes 2 zerfällt in einen Einlaufabschnitt 6 und einen Austrageabschnitt 7. Eine Übergabestelle 8 zwischen dem Einlaufabschnitt 6 und dem Austrageabschnitt 7 wird von zwei Umlenkkanten 9 und 10 gebildet. Die Umlenkkante 9 stellt zugleich das Ende des Einlaufabschnitts 6 dar, während die Umlenkkante 10 den Beginn des Austrageabschnitts 7 bildet.

An der Antriebsstelle 3 ist eine Antriebstrommel 11 ortsfest gelagert, die über einen nicht dargestellten Motor gemäß Pfeil 12 kontinuierlich angetrieben wird. Dieser Antrieb kann in seiner Geschwindigkeit steuerbar ausgebildet sein und damit entsprechend einer vor- oder nachgeschalteten Maschine, also einer Herstellungsmaschine oder einer Verpackungsmaschine gesteuert werden. Zum Verständnis der Transporteinrichtung kann vereinfacht angenommen werden, daß die Antriebstrommel 11 mit gleichförmiger Geschwindigkeit kontinuierlich angetrieben wird. Das Band 2 ist beginnend an der Antriebstrommel 11 über eine ortsfest Umlenkrolle 13 geschlungen und gelangt über eine Umlenktrommel 14 und eine weitere ortsfeste Umlenkrolle 15 zu einer Bremstrommel 16 am Anfang des Einlaufabschnitts. Die Bremstrommel 16 kann über eine nicht dargestellte Bremssteuerung abgebremst und stillgesetzt werden, so daß hier insgesamt eine Vorrichtung 17 zum Festhalten des Einlaufabschnitts 6 gebildet ist.

Das Band 2, welches mit seinem oberen Trum 5 einerseits den Einlaufabschnitt 6 bildet, ist um die Umlenkkante 9 herumgeführt und läuft sodann um eine Umlenkrolle 18 und eine weitere ortsfeste Umlenkrolle 19. Es ist sodann um eine Umlenktrommel 20 geschlungen und über weitere Umlenkrollen 21 und 22 sowie schließlich um eine Bremstrommel 23 geführt, bevor es als Austrageabschnitt 7 über die Umlenkkante 10 läuft. Am Ende des Austrageabschnittes 7 ist eine Umlenkkante 24 vorgesehen. Über Umlenkrollen 25 und 26 läuft das Band 2 zurück zur Antriebsstelle 3.

Die Bremstrommel 23 gehört zu einer Vorrichtung 27, die analog zur Vorrichtung 17 ausgebildet ist und beim Festbremsen der Bremstrommel 23 ein weiteres Auflaufen von Band über die Umlenkkante 10 hinweg verhindert.

Die beiden Umlenkkanten 9 und 10, die Umlenkrollen 18, 21 und 22 sowie die Bremstrommel 23 sind auf einem gemeinsamen Schlitten 28 angeordnet, der durch eine gepunktete U-förmige Linie symbolhaft verdeutlicht ist. Die Umlenkrolle 19 hingegen ist ortsfest, also gestellfest am Rahmen der Transporteinrichtung 1 vorgesehen. Der Schlitten 28 ist in Bandförderrichtung 29 sowie entgegengesetzt dazu verfahrbar. Hierzu dient ein Zylinder 30, der mit seinem einen Ende gestellfest gelagert ist, während er mit seinem anderen Ende bzw. seiner Kolbenstange an dem Schlitten 28 angreift. Der Zylinder 30 kann pneumatisch oder hydraulisch beaufschlagt sein und über eine entsprechende Steuereinrichtung mit Schaltventil usw. betätigt werden.

Zwischen der Antriebsstelle 3 und der Bremstrommel 16, also dem Einlaufabschnitt 6 zugeordnet, ist ein Bandspeicher 31 vorge sehen. Dieser Bandspeicher 31 besteht aus den beiden gestellfest angeordneten Umlenkrollen 13 und 15 und der dazu beweglichen Umlenktrommel 14, die auf einem Gleitrahmen 32 gelagert ist, der ebenfalls in Bandförderrichtung 29 bzw. entgegengesetzt dazu relativ verfahrbar am Gestell der Transporteinrichtung 1 vorgesehen ist. Der Gleitrahmen 32 trägt im übrigen die Umlenktrommel 20, die zusammen mit den Umlenkrollen 19 und 21 einen Bandspeicher 33 bildet, der zwischen dem Einlaufabschnitt 6 und dem Austrageabschnitt 7 des Bandes 2 vorgesehen ist. Die beiden Bandspeicher 31 und 33 sind so ausgebildet und angeordnet, daß sie sich bei einer Relativbewegung des Gleitrahmens 32 gegenläufig verhalten. Wird der Gleitrahmen 32 in Figur 1 nach links bewegt, dann nimmt der Bandspeicher 31 zusätzliches Band 2 auf, während der Bandspeicher 33 Band 2 abgibt und umgekehrt. Zur Bewegung des Gleitrahmens 32 bzw. der beiden Bandspeicher 31 und 33 dient ein Zylinder 34, der mit seinem einen Ende am Gestell der Transporteinrichtung 1 verankert ist und dessen Kolbenstange an dem Gleitrahmen 32 angreift. Auch dieser Zylinder kann pneumatisch oder hydraulisch ausgebildet sein und über entsprechende nicht dargestellte Schalt- und Steuereinrichtungen verfügen. Anstelle der Umlenktrommeln 14 und 20 könnten auch die Umlenkrollen 13 und 19 auf dem Gleitrahmen 32 angeordnet sein, der dann ebenfalls über den Zylinder 34 in entsprechender Weise betätigt werden könnte. Bei dieser Bauart weist der Gleitrahmen 32 eine relativ kurze Erstreckung in Bandförderrichtung 29 auf.

In Figur 1 ist oberhalb des Einlaufabschnittes 6 durch gepunktete Darstellung angedeutet, wo Warenstücke in Form einer Artikelreihe seitlich, also quer zur Zeichenebene aufgeschoben werden. In Figur 2 ist die Artikelreihe 35 mit den einzelnen Warenstücken 36 in aufgeschobenem Zustand dargestellt. Durch die Lage der Übergabestelle 8 zwischen den beiden Umlenkkanten 9 und 10 wird eine Ausgangsstellung 37 oder Nullstellung markiert. Es ist erkennbar, daß diese Ausgangsstellung einen Abstand 38 zu der vordersten Kante des ersten Warenstücks 36 der Artikelreihe 35 aufweist. Dieser Abstand 38 berücksichtigt Toleranzen in der relativen Lage der Artikelreihe 35 zu dem Einlaufabschnitt 6, der in vergleichsweise engen Grenzen schwanken kann. Bei einer Länge der Artikelreihe 35 von z. B. 900 mm kann der Abstand 38 zum Auffangen der Toleranzen beispielsweise 40 mm betragen. Wenn sichergestellt ist, daß in der relativen Lage der Artikelreihe 35 zum Einlaufabschnitt 6 keine Toleranzen auftreten, kann der Abstand 38 zu Null reduziert werden.

Die Folge der Verfahrensschritte, die an dem Austrageband 1 zur Einwirkung gebracht werden, wird im Folgenden erläutert.

In Figur 1 ist die Relativlage der Teile der Transporteinrichtung in der Ausgangsstellung dargestellt, und zwar vor dem Aufschieben der ersten Artikelreihe 35. Beide Bremstrommeln 16 und 23 sind festgebremst. Die Vorrichtung 17 hält den Einlaufabschnitt 6 fest, so daß dieser die Geschwindigkeit 0 aufweist. Die Vorrichtung 27 hält den Austrageabschnitt 7 fest. Da an der Antriebsstelle 3 jedoch die Antriebstrommel 11 kontinuierlich angetrieben wird, zieht diese an dem Band 2 und der Austrageabschnitt 7 bewegt sich mit einer Geschwindigkeit v₂, die dem Produkt der Winkelgeschwindigkeit der Antriebstrommel 11 mit ihrem Radius entspricht.

Zwischen den Darstellungen der Figuren 1 und 2 ist die Artikelreihe 35 auf den stillstehenden Einlaufabschnitt 6 aufgeschoben worden, während sich die Übergabestelle 8 mit den Umlenkkanten 9 und 10 um die Strecke 39 von der Ausgangsstellung 37 entfernt hat. Dabei wird über das Band 2 und den Austrageabschnitt 7 sowie über die Bremstrommel 23 der Schlitten 28 nach rechts gezogen, so daß die Kolbenstange des Zylinders 30 entsprechend ausfährt. Dieser Vorgang kann auch aktiv durch einen Steuervorgang des Zylinders 30 unterstützt werden. Während des Übergangs zwischen Figur 1 und 2 hat sich auch das Band 2 verschoben, welches an der Antriebsstelle 3 kontinuierlich angetrieben wurde. Durch die Verlagerung der Übergabesstelle 8 um die Strecke 39 muß auch weiteres Bandmaterial am Ende des Einlaufabschnitts 6, also im Bereich der Bandkante 9 nachgeliefert werden. Dies geschieht aus dem Bandspeicher 33, während gleichzeitig der Bandspeicher 31 eine genau gleichgroße Bandlänge aufnehmen muß. Während in Figur 1 die Umlenktrommel 20 um einen Abstand 40 von einer Referenzlinie 41 entfernt war und gleichzeitig die Umlenktrommel 14 ebenfalls um diesen gleichen Abstand 40 von einer Referenzlinie 42 entfernt war (das Doppelte des Abstandes 40 entspricht dem Abstand 38) zeigt Figur 2 einen horizontalen Abstand 43 der Umlenktrommel 20 von der Referenzlinie 41. Der gleiche Abstand 43 ist auch im Bereich des Bandspeichers 31 bzw. bezüglich der Umlenktrommel 14 ersichtlich. Dieser Abstand 43 entspricht der Hälfte der Summe des Abstandes 38 und der Strecke 39.

Das Verfahren des Gleitrahmens 32 kann durch eine aktive Steuerung des Zylinders 34 unterstützt werden.

Nachdem die Stellung gemäß Figur 2 durchlaufen ist, wird die Bremstrommel 16 gelöst, so daß der Einlaufabschnitt 6 mit der Geschwindigkeit des Austrageabschnitts 7 weiterläuft. Danach wird durch eine Betätigung des Zylinders 34 die gespeicherte Bandlänge im Bandspeicher 31 vollständig abgebaut und im Bereich des Bandspeichers 33 aufgebaut. Dabei wird der Einlaufabschnitt 6 mit einer größeren Geschwindigkeit als der Austrageabschnitt 7 angetrieben, so daß die Warenstücke 36 der Artikelreihe 35 auf dem Einlaufabschnitt 6 beschleunigt vorangezogen werden, bis das vorderste Warenstück 36 die Übergabestelle 8 erreicht. Dieser Zeitpunkt ist in Figur 3 dargestellt. Die Übergabestelle 8 befindet sich im Abstand 44 von der Ausgangsstellung 37. Die Umlenktrommel 20 hat die Referenzlinie 41 erreicht, ebenso die Umlenktrommel 14 die Referenzlinie 42.

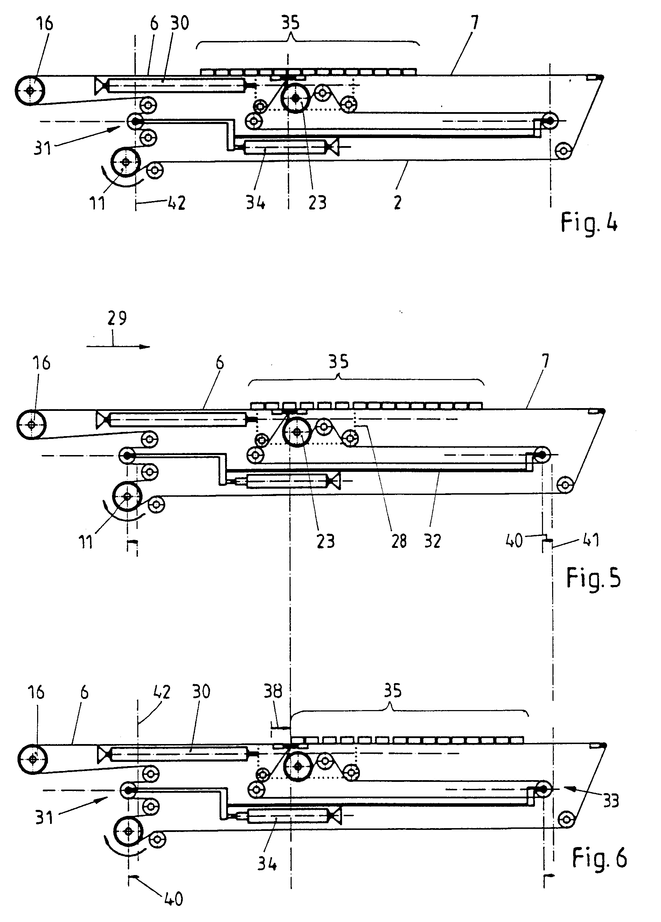

Sodann wird die Bremstrommel 23 gelöst, und durch Betätigen des Zylinders 30 wird die Übergabestelle 8 mit den beiden Umlenkkanten 9 und 10 auf dem Schlitten 28 in die Ausgangsstellung 37 zurückgefahren, wie dies Figur 4 zeigt. Während dieser Bewegung ändert sich an der Geschwindigkeit im Bereich des Einlaufabschnitts 6 und des Austrageabschnitts 7 nichts, d. h. in beiden Abschnitten liegt die gleiche Geschwindigkeit vor, so daß die Abstände zwischen benachbarten Warenstücken 36 der Artikelreihe 35 sich nicht verändern.

Nach der Stellung gemäß Figur 4 muß das Band wieder zurück in seine Anfangsstellung gebracht werden, d. h. der Abstand 38 entsprechend den beiden Abständen 40 muß wiederhergestellt werden, wenn der Abstand 38 ungleich 0 ist. Diese Bewegung erfolgt durch eine entsprechende Betätigung des Zylinders 34, so daß die Artikelreihe 35 in ihrem hinteren Bereich geringfügig gestreckt wird, wie dies Figur 5 erkennen läßt, so daß hier unterschiedliche Abstände zwischen benachbarten Warenstücken im hinteren Bereich der Artikelreihe 35 im Vergleich zum vorderen Bereich der Artikelreihe 35 auftreten. Dies ist deshalb der Fall, weil die Geschwindigkeit im Bereich des Einlaufabschnittes geringfügig kleiner ist als die Geschwindigkeit im Bereich des Austrageabschnittes und sich die Artikelreihe teilweise rechts und teilweise links von der Übergabestelle 8 befindet. Nachdem der Gleitrahmen 32 seine Ausgangsstellung gemäß Figur 5 wieder eingenommen hat, wird die Artikelreihe 35 mit der Geschwindigkeit ausgetragen, wie sie dem Antrieb der Antriebstrommel 11 entspricht.

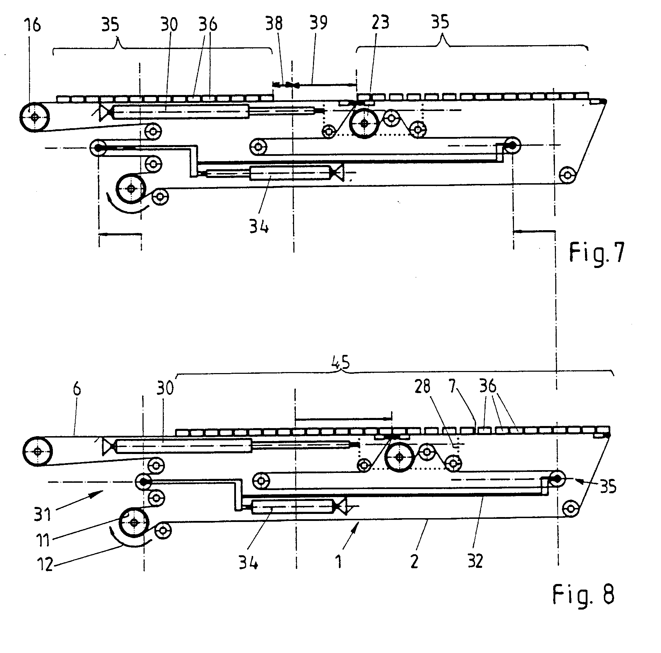

Nachdem das Ende der Artikelreihe 35 die Übergabestelle 8 zwischen den Umlenkkanten 9 und 10 überfahren hat, werden die beiden Bremstrommeln 16 und 23 festgebremst, wie dies in Figur 6 dargestellt ist. Damit ist der Einlaufabschnitt 6 stillgesetzt, und es kann eine weitere Artikelreihe 35 aufgeschoben werden, wie dies Figur 7 zeigt. Während dieses Aufschiebevorganges hat sich jedoch der Austrageabschnitt 7 weiterbewegt, und die Übergabestelle 8 ist wiederum um die Strecke 39 nach rechts von der Ausgangsstellung 37 weitergelaufen. Damit ist zwischen dem letzten Warenstück der ersten Artikelreihe 35 und dem ersten Warenstück 36 der nachfolgend aufgeschobenen Artikelreihe 35 eine Lücke entsprechend der Summe aus dem Abstand 38 und der Strecke 39 entstanden. Auch die beiden Bandspeicher 31 und 33 wurden entsprechend betätigt.

Am Übergang zwischen den Figuren 7 und 8 wird die Bremstrommel 16 gelöst, die vollständige gespeicherte Bandlänge in den Bandspeichern 31 und 33 freigesetzt bzw. aufgenommen und dadurch die zweite Artikelreihe 35 beschleunigt mit vergleichsweise höherer Geschwindigkeit bis unmittelbar an das Ende der voranlaufenden Artikelreihe 35 herangezogen. Die Strecke 39 in Figur 7 kann geringfügig von der Strecke 39 in Figur 2 abweichen, wenn die beiden behandelten Artikelreihen 35 eine etwas von einander abweichende Toleranzlage relativ zum Einlaufabschnitt 6 aufwiesen. Die Strecken 39 können ebenfalls variieren, wenn die Zeiten zum Aufschieben der jeweils nächsten Artikelreihe 35 variieren. Ansonsten entspricht Figur 6 der Figur 1. Figur 7 wiederholt Figur 2, und Figur 8 zeigt Figur 3. Es ist ersichtlich, daß sich das aufgezeigte Spiel für jede Artikelreihe 35 wiederholt. Figur 8 läßt schließlich erkennen, daß aus den beiden Artikelreihen 35 eine lückenlose Reihe 45 von Warenstücken 36 entstanden ist, die gleichmäßig über den Austrageabschnitt 7 ausgetragen werden.

### BEZUGSZEICHENLISTE

- 1: - Transporteinrichtung
- 2: - Band
- 3: - Antriebsstelle
- 4: - unteres Trum
- 5: - oberes Trum
- 6: - Einlaufabschnitt
- 7: - Austrageabschnitt
- 8: - Übergabestelle
- 9: - Umlenkkante
- 10: - Umlenkkante
- 11: - Antriebstrommel
- 12: - Pfeil
- 13: - Umlenkrolle
- 14: - Umlenktrommel
- 15: - Umlenkrolle
- 16: - Bremstrommel
- 17: - Vorrichtung
- 18: - Umlenkrolle
- 19: - Umlenkrolle
- 20: - Umlenktrommel
- 21: - Umlenkrolle
- 22: - Umlenkrolle
- 23: - Bremstrommel
- 24: - Umlenkkante
- 25: - Umlenkrolle
- 26: - Umlenkrolle
- 27: - Vorrichtung
- 28: - Schlitten
- 29: - Bandförderrichtung
- 30: - Zylinder
- 31: - Bandspeicher
- 32: - Gleitrahmen
- 33: - Bandspeicher
- 34: - Zylinder
- 35: - Artikelreihe
- 36: - Warenstück
- 37: - Ausgangsstellung
- 38: - Abstand
- 39: - Strecke
- 40: - Abstand
- 41: - Referenzlinie
- 42: - Referenzlinie
- 43: - Abstand
- 44: - Abstand
- 45: - Reihe

## Patentansprüche

1. Transporteinrichtung (1) zum gleichmäßigen Austragen von reihenweise zugeführten Warenstücken (36), insbesondere Süßwarenstücken, mit einer angetriebenen Förderbandanordnung mit einem Einlaufabschnitt (6) und einem daran anschließenden Austrageabschnitt (7), wobei zwischen den beiden Abschnitten (6, 7) eine Übergabestelle (8) für die Warenstücke (36) zwischen zwei Bandumlenkungen gebildet wird, die auf einem Schlitten (28) angeordnet sind, der in und entgegen der Förderrichtung verfahrbar ist, und mit zwei Bandspeichern (31, 33), die gemeinsam so verschoben werden können, daß ein Bandspeicher (31, 33) Band aufnimmt und der andere Band abgibt oder umgekehrt, dadurch gekennzeichnet, daß die Förderbandanordnung ein einziges angetriebenes Band (2) aufweist, daß im Bereich seines oberen Trums (5) unter Bildung der Übergabestelle (8) zwischen zwei Umlenkkanten (9, 10) in den Einlaufabschnitt (6) und den Austrageabschnitt (7) unterteilt ist, daß das Band (2) im Bereich seines unteren Trums (4) eine Antriebsstelle (3) aufweist, daß eine Vorrichtung (17) zum Festhalten des Einlaufabschnitts (6) und eine Vorrichtung (27) zum Festhalten des Austrageabschnitts (7) vorgesehen ist, daß die beiden Umlenkkanten (9, 10) und die Vorrichtung (27) zum Festhalten des Austrageabschnitts (7) auf dem in Bandförderrichtung (29) und entgegengesetzt dazu verfahrbaren Schlitten (28) angeordnet sind, und daß zwischen der Antriebsstelle (3) und dem Einlaufabschnitt (6) einerseits und zwischen den beiden Umlenkkanten (9, 10) andererseits je ein Bandspeicher (31, 33) angeordnet ist, und daß durch Betätigen der Vorrichtungen (17, 27) zum Festhalten, Verfahren der Übergabestelle (8) und Verschieben der Bandspeicher (31, 33) der Verlauf der Geschwindigkeiten von Einlaufabschnitt (6) und Austrageabschnitt (7) so gesteuert wird, daß entstehende Lücken zwischen auf den Einlaufabschnitt (6) nacheinander aufgebrachter Artikelreihen (33) oder Gruppen von Warenstücken (36) mit begrenzter Anzahl beseitigt werden.

2. Transporteinrichtung (1) nach Anspruch 1, dadurch gekennzeichnet, daß die Antriebsstelle (3) einen Motor und eine Antriebstrommel (11) für den kontinuierlichen Antrieb des Austrageabschnitts (7) aufweist.

3. Transporteinrichtung (1) nach Anspruch 1 oder 2, dadurch gekennzeichnet, daß ein steuerbarer Antrieb für die Bewegung des in Bandförderrichtung (29) sowie entgegengesetzt dazu verfahrbaren Schlittens (28) vorgesehen ist.

4. Transporteinrichtung (1) nach Anspruch 1 oder 2, dadurch gekennzeichnet, daß ein steuerbarer Antrieb für die Bewegung der beiden Bandspeicher (31, 33) vorgesehen ist.

5. Transporteinrichtung (1) nach Anspruch 3 oder 4, dadurch gekennzeichnet, daß einer oder beide steuerbaren Antriebe als über ein Fluid betätigbare Zylinder (30, 34) ausgebildet sind.

6. Transporteinrichtung (1) nach einem der Ansprüche 1 bis 5, dadurch gekennzeichnet, daß als Vorrichtungen (17, 27) zum Festhalten des Einlaufabschnitts (6) und des Austrageabschnitts (7) Bremstrommeln (16, 23) vorgesehen sind, über die das Band (2) geführt ist und die in der Nähe des Beginns des Einlaufabschnitts (6) und des Austrageabschnitts (7) angeordnet sind.

7. Transporteinrichtung (1) nach einem der Ansprüche 4 bis 6, dadurch gekennzeichnet, daß jeder der Bandspeicher (31, 33) je eine Umlenktrommel (14, 20) aufweist, die auf einem gemeinsamen Gleitrahmen (32) angeordnet und mit diesem in Bandförderrichtung (29) und entgegengesetzt dazu über den steuerbaren Antrieb verfahrbar sind, und daß um die Umlenktrommeln (14, 20) Schlaufen des Bandes (2) geschlungen sind.

8. Verfahren zum gleichmäßigen Austragen von reihenweise zugeführten Warenstücken (36), insbesondere Süßwarenstücken, mit einer Transporteinrichtung (1) nach einem der Ansprüche 1 bis 7, dadurch gekennzeichnet, daß das Band (2) im Bereich seines unteren Trums (4) kontinuierlich angetrieben wird, daß über die Bandspeicher (31, 33) im unteren Trum (4) und über steuerbare Antriebe für die Übergabestelle (8) und die Bandspeicher (31, 33) sowie über die Vorrichtungen (17, 27) zum Festhalten des Einlaufabschnittes (6) und des Austrageabschnittes (7) der Verlauf der Geschwindigkeiten des Einlaufabschnitts (6) und des Austrageabschnitts (7) so gesteuert wird, daß die Artikelreihen (35) von Warenstücken (36) reihenweise im Stillstand auf den getaktet angetriebenen Einlaufabschnitt (6) aufgegeben werden, und daß die durch die reihenweise erfolgende Aufgabe erzeugte Lücke beseitigt wird.

9. Verfahren nach Anspruch 8, dadurch gekennzeichnet, daß der Austrageabschnitt (7) kontinuierlich angetrieben wird, daß der Einlaufabschnitt (6) nach der Übergabe einer Artikelreihe (35) von Warenstücke (36) aus dem Stillstand nach Lösen seiner Vorrichtung (17) zum Festhalten beschleunigt und unter gleichzeitigem Verfahren der Übergabestelle (8) und der Bandspeicher (31, 33) solange mit höherer Geschwindigkeit als der Austrageabschnitt (7) angetrieben wird, bis die durch die reihenweise erfolgende Aufgabe erzeugte Lücke beseitigt ist, und daß der Einlaufabschnitt (6) und der Austrageabschnitt (7) nachfolgend bei gelösten Vorrichtungen (17, 27) zum Festhalten mit übereinstimmender Geschwindigkeit angetrieben und die Übergabestelle (8) entgegen der Bandförderrichtung (29) zurückgesetzt wird.

10. Verfahren nach Anspruch 8 oder 9, dadurch gekennzeichnet, daß die Übergabestelle (8) zu Beginn jedes Aufgabezyklusses in einen Abstand (38) zu dem vordersten Warenstück (36) der Artikelreihe (35) verfahren wird.
